# FASCICULE DE BREVET EUROPEEN

(11) **EP 3 784 723 B1**
(45) Date de publication et mention de la délivrance du brevet: **24.01.2024**
(21) Numéro de dépôt: 19728724.6
(22) Date de dépôt: 26.04.2019
(51) Int. Cl.: C08J 11/10, C08J 11/12

(54) **PROCÉDÉ DE RECYCLAGE DE THERMOPLASTIQUE PAR DEPOLYMÉRISATION COURTE**
VERFAHREN ZUR WIEDERGEWINNUNG VON THERMOPLASTEN DURCH KURZE DEPOLYMERISATION
METHOD OF RECYCLING THERMOPLASTICS BY SHORT DEPOLYMERISATION

(30) Priorité: 27.04.2018 FR 1853738
(43) Date de publication de la demande: 03.03.2021
(73) Titulaire: ARKEMA FRANCE, 92700 Colombes (FR)
(72) Inventeur: DUBOIS, Jean-Luc, 69390 Millery (FR)
(74) Mandataire: Arkema Patent
(86) Numéro de dépôt international: PCT/FR2019/050987
(87) Numéro de publication internationale: WO 2019/207260

(56) Documents cités:
- EP-A2- 0 532 893
- EP-A2- 3 023 478
- WO-A1-00/39205
- FR-A1- 2 804 687
- JP-A- H11 166 184
- US-A1- 2012 138 601

## Description

### [Domaine Technique]

La présente invention concerne de manière générale le recyclage de résine thermoplastique et/ou d'article comprenant notamment une résine thermoplastique, en particulier des articles composites comprenant notamment une résine thermoplastique.

L'invention trouve des applications dans divers secteurs industriels tels que l'environnement ou la plasturgie, et en particuliers ceux confrontés aux problématiques de recyclage de produits en fin de vie comprenant des résines thermoplastiques.

### [Art Antérieur]

En 2017, des milliers de tonnes de thermoplastiques ont été mondialement produites. Ainsi, la production et le recyclage des thermoplastiques apparaissent aisément comme des enjeux majeurs d'un point de vue environnemental et économique. Il est donc intéressant économiquement et d'un point de vue environnemental de pouvoir dépolymériser la résine polymérique et obtenir des produits de dépolymérisation qui puissent être réutilisés. Parmi les méthodes classiques de recyclage des matières plastiques, la pyrolyse thermique et le recyclage mécanique sont les plus employées.

La pyrolyse thermique de thermoplastiques consiste à placer l'objet en thermoplastique à traiter dans une chambre adéquate puis à chauffer la chambre afin que la chaleur soit transférée à l'objet en thermoplastique. Elle permet de traiter les déchets thermoplastiques et conduit généralement à des résidus charbonneux, de l'huile et des gaz qui ne peuvent pas être réutilisés pour la production de matrice en polymère thermoplastique. De plus, la pyrolyse thermique est difficilement adaptable pour une utilisation à grande échelle du fait des problèmes de stockage des déchets et des coûts associés. En outre, la pyrolyse thermique implique une installation particulière avec un dispositif de chauffage approprié dont la gestion peut être périlleuse compte tenu des risques d'incendie notamment. A cela s'ajoute que ce type d'installation connaît des problèmes d'encrassage qui sont amplifiés lors d'une utilisation à grande échelle, impliquant un coût d'entretien important.

En particulier, dans le cas du polyméthacrylate de méthyle, on connaît le recyclage utilisant un lit de plomb fondu (ou autre métaux fondus tels que : étain (Sn) ou zinc(Zn)) dans lequel les articles sont broyés, injectés en fond de lit de plomb porté à une température supérieure à 400°C ou en surface, puis décomposés. Un tel procédé présente cependant plusieurs inconvénients. Lors du procédé, la résine est gazéifiée et les contaminants de l'article s'accumulent sur le lit de plomb. Dans le cas de composites, des résidus solides et/ou des fibres s'accumulent en continu. Ce procédé s'accompagne donc de problèmes d'encrassement du lit de plomb et du réacteur dans lequel il est disposé, ces problèmes étant accentués dans le cas des composites car le lit de plomb nécessite d'être régulièrement débarrassé des résidus à sa surface. Le nettoyage du réacteur, et des divers éléments constituant le dispositif de recyclage sur lit de plomb fondu, est fastidieux et génère des sous-produits toxiques contenant du plomb. Le traitement des déchets pollués au plomb issus des étapes de nettoyage notamment, ainsi que les coûts associés sont donc à prévoir. Certains grades de résines du polyméthacrylate de méthyle forment aussi des résidus solides, sans que ces résines puissent être facilement distinguées des résines ou plaques coulées ne formant pas ou peu de résidus solides. En outre, la production de résidus solides contaminés au plomb (ou autres métaux fondus tel que Sn ou Zn) est d'autant plus importante que le composite est riche en renfort tels que des matières inorganiques ou des fibres. Ce procédé de recyclage est donc insatisfaisant et, de plus, est inadapté au traitement de composites.

On connaît également le procédé de dépolymérisation sur lit fluidisé dans lequel le lit fluidisé peut être un lit de sable de silice placé dans un réacteur à lit fluidisé. Dans ce procédé, l'article contenant la résine en polymère P1 est préalablement broyé, puis le broyat obtenu est introduit dans le réacteur contenant le lit fluidisé sous un flux de gaz inerte ou de monomère à l'état gazeux avec une température allant de 450°C à 550°C. Dans ce lit, la résine en polymère P1 est rapidement chauffée et gazéifiée. Dans le cas d'un composite comprenant de la résine et des fibres par exemple, la résine est gazéifiée et il reste alors les fibres débarrassées de la résine. Les fibres restantes sont en partie emportées hors du lit dans le flux gazeux vers une chambre de combustion secondaire. Bien que ce procédé permette de séparer les fibres de la résine d'un composite, il présente l'inconvénient de dégrader les fibres telles que les fibres de verre ou de carbone, qui voient leurs propriétés mécaniques amoindries. Une autre partie des fibres et du polymère partiellement décomposé est soutirée du réacteur en continu, en même temps que le sable. Le sable contenant le polymère résiduel est conduit dans une chambre d'incinération où le sable est réchauffé, et le polymère résiduel brulé. Le sable porté à une température élevée, est alors retourné au réacteur, où il est mélangé avec le sable déjà présent et avec du polymère/composite.

Ainsi, il existe des méthodes de recyclage de résine thermoplastique et/ou de matériau composite thermoplastique incluant parfois une dépolymérisation de la résine polymère. Cependant, ces méthodes ne sont pas efficaces en termes de temps de traitement et de coût énergétique. De plus, l'obtention par ces méthodes de monomère de départ n'est généralement pas satisfaisante en termes de rendement et/ou de qualité pour une réutilisation dans la préparation de résine thermoplastique et/ou de composite comportant une résine thermoplastique.

Le document WO00/39205 décrit un procédé de recyclage d'un article. L'article comporte une résine en polymère thermoplastique.

Le document JPH11166184 décrit un procédé de stabilisation d'une huile pyrolysée, composée de polymères destinés au rebus, obtenue à partir de déchets plastiques.

Le document EP30234784 décrit un procédé de recyclage de matériaux composites capables de récupérer les fibres provenant de parties de matériaux composites ou de tissus préimprégnés de polymères.

Le document WO00/39205 décrit un procédé de recyclage d'un article comportant une résine en polymère comprenant des étapes de chauffage de ladite résine pour convertir au moins en partie le polymère en au moins deux polymères ayant une masse molaire inférieure.

### [Problème technique]

L'invention a donc pour but de remédier à au moins un des inconvénients précités de l'art antérieur.

L'invention vise notamment à proposer une solution simple et efficace pour recycler un article comportant une résine en polymère thermoplastique, tout en minimisant la consommation d'énergie et sans dégradation thermique des éventuels autres matériaux en présence.

### [Brève description de l'invention]

A cet effet, un premier aspect de l'invention propose un procédé de recyclage d'un article comportant une résine en polymère P1 thermoplastique, ledit polymère P1 thermoplastique ayant été formé à partir de monomères de base, ledit procédé comprenant les étapes suivantes :
- Chauffer ladite résine afin de convertir, au moins en partie, le polymère P1 thermoplastique en au moins deux polymères P2, lesdits au moins deux polymères P2 ayant une masse molaire inférieure à la masse molaire dudit polymère P1,
- Refroidir lesdits au moins deux polymères P2 obtenus après chauffage à une température sensiblement égale ou inférieure à la température d'ébullition desdits monomères de base, et
- Solubiliser lesdits au moins deux polymères P2 dans une solution comportant lesdits monomères de base.

L'invention vise à obtenir des polymères de masse molaire réduite par rapport au polymère de départ, lesdits polymères P2 pouvant alors être solubilisés rapidement dans leur monomère de base de façon être par exemple réintroduits dans un circuit de fabrication d'un nouvel article. Ainsi, le chauffage, de préférence local, de la résine permet d'amorcer une dépolymérisation du polymère P1. Lorsque le chauffage est réalisé localement sur une ou plusieurs zones, il permet d'amorcer la dépolymérisation du polymère P1 en bout de chaine polymérique ou en de nombreux points de la chaine polymérique. Il peut alors se former un mélange de polymères P2 présentant une masse molaire réduite par rapport au polymère P1 initial et il peut se former également le monomère de base lorsque la dépolymérisation est initiée en bout de chaine. De préférence, la masse molaire de la chaine polymérique est donc fortement abaissée si bien que les polymères P2 peuvent être récupérés par solubilisation dans le monomère de base.

**Selon d'autres caractéristiques optionnelles du procédé :**
- la résine en polymère P1 thermoplastique de l'article est une résine à base de poly(méthacrylate de méthyle), de polystyrène, ou d'un mélange de ces polymères ;
- la résine en polymère P1 thermoplastique est une résine de poly(méthacrylate de méthyle) ;
- l'article à base de résine en polymère P1 thermoplastique est un article en matériau composite qui comprend en outre un renfort et le procédé comprend en outre une étape de filtration de solides après l'étape de solubilisation des polymères P2 dans le monomère de base ;
- l'étape de chauffage est répétée jusqu'à obtenir une perte de masse de la résine en polymère P1 thermoplastique d'au moins 10 % par rapport au poids total initial de la résine polymère P1. Avantageusement, cette perte de masse correspond à une dépolymérisation d'au moins 10 % par rapport au poids total initial de la résine polymère P1 et donc à la formation de monomère de base qui est à l'état gazeux dans les conditions de dépolymérisation ;
- l'étape de chauffage est répétée jusqu'à obtenir une perte de masse de la résine en polymère P1 thermoplastique comprise entre 10 % et 90 % par rapport au poids total initial de la résine polymère P1.
- l'étape de chauffage consiste à chauffer localement plusieurs zones de la résine, et est réalisée au moyen de champs électriques pulsés ou de microondes ;
- les champs électriques pulsés correspondent à une pluralité de décharges électriques. Avantageusement, la tension entre des électrodes qui génère ladite décharge, le temps de commutation et la fréquence de décharge sont tels que chaque décharge réalise un chauffage localisé permettant l'obtention desdits au moins deux polymères P2 de masse molaire inférieure à la masse molaire du polymère P1 ;
- l'étape de chauffage consiste à chauffer par impulsions d'une durée comprise entre 1 et 1000 µs, de préférence comprise entre 10 et 500 µs et de manière plus préférée de 10 à 100 µs.
- lesdits monomères de base compris dans la solution utilisée pour solubiliser lesdits au moins deux polymères P2 proviennent au moins en partie du recyclage d'un autre article à base de résine en polymère P1 thermoplastique. Cela permet de d'augmenter la quantité de monomère de base et ainsi d'augmenter la vitesse de solubilisation des polymères P2 ;
- la température de chauffage local est supérieure à 300°C, de préférence comprise entre 350 et 450°C. La mesure de température peut de préférence être effectuée à l'aide d'un pyromètre optique pour ne pas avoir de sonde en contact direct avec le matériau et exposé aux champs pulsés.

La divulgation concerne en outre sur un système pour recycler un article comportant une résine en polymère P1 thermoplastique, ledit polymère P1 thermoplastique ayant été formé à partir de monomères de base, ledit système étant caractérisé en ce qu'il comprend :
- une enceinte pour accueillir ledit article, ladite enceinte étant équipée de moyens pour chauffer ladite résine de façon à convertir, au moins en partie, le polymère P1 thermoplastique en au moins deux polymères P2, de préférence lesdits au moins deux polymères P2 ayant une masse molaire inférieure à la masse molaire dudit polymère P1,
- un dispositif d'échange thermique configuré pour refroidir les au moins deux polymères P2,
- un dispositif de mise en contact des au moins deux polymères P2 avec une solution comportant les monomères de base, et
- un dispositif de récupération configuré pour recueillir les au moins deux polymères P2 solubilisés dans la solution comportant les monomères de base.

**Selon d'autres caractéristiques optionnelles du système :**
- Il comprend un moyen de collecte apte à collecter un mélange de monomère de base à l'état gazeux ;
- Il comprend une unité de condensation apte à condenser le mélange de monomère de base à l'état gazeux ;
- l'article est un article en matériau composite comprenant en outre un renfort et l'enceinte comprend en outre un moyen de filtration apte à retenir des solides non solubles dans le monomère de base ;
- il comprend un moyen d'injection apte à introduire dans l'enceinte un monomère de base à l'état liquide. Dans ce cas, de préférence, l'injection de monomère se fait lorsque les polymères P2 ont été refroidis.

D'autres caractéristiques et avantages de l'invention apparaîtront à la lecture de la description suivante faite à titre illustratif et non limitatif en regard des Figures annexées qui représentent :
- la Figure 1, un schéma simplifié d'un dispositif pour la mise en oeuvre d'un procédé de recyclage selon un mode de réalisation ; et
- la Figure 2, un diagramme schématisant les étapes du procédé de recyclage selon un mode de réalisation.

### [Description de l'invention]

Dans la suite de la description, on entend par « monomère », une molécule qui peut subir une polymérisation.

Le terme « polymérisation » tel qu'utilisé se rapporte au procédé de transformation d'un monomère ou d'un mélange de monomères en un polymère.

Le terme « dépolymérisation » tel qu'utilisé se rapporte au procédé de transformation d'un polymère en un ou plusieurs monomère(s) et/ou oligomère(s) et/ou polymère(s) de plus petite masse molaire que le polymère initial.

On entend par « polymère », soit un copolymère soit un homopolymère. Un « copolymère » est un polymère regroupant plusieurs unités monomères différentes et un « homopolymère » est un polymère regroupant des unités monomères identiques.

On entend par « polymère thermoplastique », un polymère qui, de manière répétée, peut être ramolli ou fondu sous l'action de la chaleur et qui adopte de nouvelles formes par application de chaleur et de pression. Des exemples de thermoplastiques sont, par exemple : le poly(méthacrylate de méthyle) (PMMA), ou encore le polystyrène (PS).

On entend par « polymère (méth)acrylique », un homopolymère ou un copolymère à base de monomère (méth)acrylique, lequel est par exemple choisi parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges. Le poly(méthacrylate de méthyle) (PMMA) est un exemple particulier de polymère (méthacrylique) obtenu par polymérisation d'un monomère de méthacrylate de méthyle. Le terme « PMMA », au sens de l'invention, désigne des homo- et copolymères de méthacrylate de méthyle (MAM), le rapport en poids de MAM dans le PMMA étant de préférence d'au moins 70 % en poids pour le copolymère de MAM.

On entend par « copolymère à base de méthacrylate de méthyle » un copolymère ayant au moins un monomère de méthacrylate de méthyle. Par exemple, un copolymère à base méthacrylate de méthyle peut être un copolymère comprenant au moins 70 %, de préférence 80 %, avantageusement 90% en poids de de MAM dans le PMMA.

On entend par « monomère de base », l'unité monomère la plus importante constitutive d'un polymère. Ainsi, dans le PMMA, le monomère de base est le MAM.

On entend par « masse molaire » la masse d'une mole d'une substance exprimée généralement en grammes par mole (g/mol). Lorsque cela s'applique à un polymère, la masse molaire correspond plus particulièrement à la masse molaire moyenne en masse.

On entend par « polymères de masse molaire réduite » au moins deux polymères P2, issus d'un polymère P1, et dont la masse molaire est inférieure à la masse molaire du polymère P1 de départ. De tels polymères P2 de masse réduite présentent l'avantage de pouvoir se solubiliser dans le monomère de base lorsque le polymère initial P1 est lui-même soluble dans son monomère de base. Le polymère P1, plus long, se dissout plus lentement que les polymères P2. Ces polymères P2 peuvent aussi se présenter sous la forme d'oligomères. De préférence, un polymère P2 présente une masse molaire moyenne de 70% ou moins de la masse molaire moyenne du polymère P1, de façon plus préférée 50 % ou moins et de façon encore plus préférée 40 % ou moins.

On entend par « résine polymère » une matière servant de liant. La « résine» comporte des polymères dont le polymère P1. Ainsi, une « résine de polymère (méth)acrylique », se rapporte à tout type de composés, polymères, oligomères, ou copolymères acryliques et méthacryliques. Cependant, on ne sortirait pas du cadre de l'invention si la résine de polymère (méth)acrylique comprenait jusqu'à 10% en poids, de préférence moins de 5% en poids, d'autres monomères non acryliques, choisis par exemple dans le groupe suivant : butadiène, isoprène, styrène, styrène substitué tel que l'α-methylstyrène ou le tert-butylstyrène, cyclosiloxanes, vinylnaphthalènes et vinyl pyridines.

On entend par « renfort », au sens de l'invention, un matériau solide qui est non dépolymérisable ou gazéifiable qui reste donc en fin de traitement, tel qu'un renfort fibreux ou une charge minérale.

On entend par « renfort fibreux », au sens de l'invention, plusieurs fibres, des stratifils unidirectionnels ou un mat à filament continu, des tissus, des feutres ou des non-tissés qui peuvent être sous la forme de bandes, nappes, tresses, mèches ou pièces.

On entend par « charge minérale », au sens de l'invention, toutes substances inertes de nature minérale pouvant être ajoutées à un polymère thermoplastique de façon à améliorer les propriétés mécaniques de l'article composite ou réduire son prix de revient. Les charges minérales peuvent par exemple être du quartz, du marbre ou de la silice.

Par « composé sensibilisant à la dépolymérisation par microondes », on entend un composé qui absorbe les radiations électromagnétiques micro-ondes et les restitue sous forme de chaleur. Dit autrement, le composé sensibilisant à la dépolymérisation par micro-ondes est un matériau avec un facteur de perte diélectrique élevé, par exemple supérieur à 0,1 à une fréquence comprise entre 900 MHz et 2500 MHz et à 25°C et/ou une constante diélectrique élevée, par exemple supérieure ou égale à 5 à une fréquence comprise entre 900 MHz et 2500 MHz et à 25°C, de sorte que l'exposition du matériau à des rayonnements électromagnétiques micro-ondes va se traduire par un échauffement rapide dudit matériau et/ou une tangente de l'angle de pertes supérieure ou égale à 1 à une fréquence comprise entre 900 MHz et 2500 MHz et à 25°C.

On entend par « permittivité relative ou constante diélectrique d'un matériau ou d'une substance » la faculté de ce ou cette dernier(e) à se polariser, c'est-à-dire la capacité à être orienté par le champ électrique.

Par « facteur de pertes diélectriques » pour le composé sensibilisant aux micro-ondes, on entend la dissipation inhérente de l'énergie électromagnétique d'un matériau diélectrique (par exemple la chaleur). Il peut être calculé en fonction de l'angle de perte δ ou de la tangente de perte correspondante tan δ. Il traduit l'efficacité de la conversion de l'énergie du champ électrique en chaleur. Ainsi, le facteur de perte diélectrique permet d'apprécier l'aptitude d'un matériau à s'échauffer sous l'action d'un rayonnement micro-ondes.

Par « sensiblement égale » on entend au sens de l'invention une valeur variant de moins de 30 % par rapport à la valeur comparée, de préférence de moins de 20 %, de façon encore plus préférée de moins de 10 %.

Dans la description des modes de réalisation qui va suivre et dans les Figures annexées, les mêmes références sont utilisées pour désigner les mêmes éléments ou des éléments similaires.

**Selon un premier aspect**, l'invention concerne **un procédé de recyclage d'un article comportant une résine en polymère P1 thermoplastique,** et notamment un article en matériau composite comprenant un renfort et une matrice en résine thermoplastique.

La résine en polymère P1 thermoplastique est une résine comprenant des polymères thermoplastiques, tels que des polymères linéaires ou ramifiés, non réticulés et présentant une certaine malléabilité facilitant ainsi leur mise en forme par application de chaleur et de pression. Les thermoplastiques retrouvent leur rigidité initiale après refroidissement, sans pour autant que la résine soit thermiquement dégradée.

La masse molaire moyenne en masse (M_{w} - abréviation en anglais) de la résine P1 thermoplastique est de préférence élevée, c'est-à-dire supérieure à 50 000 g/mol et de préférence supérieure à 100 000 g/mol. La masse molaire moyenne en masse peut être mesurée par chromatographie d'exclusion stérique.

Plus particulièrement, la résine en polymère thermoplastique est une résine à base de poly(méthacrylate de méthyle), de polystyrène ou d'un mélange de ces polymères.

Plus particulièrement, la résine en polymère thermoplastique est une résine à base d'un polymère thermoplastique soluble dans son monomère. Par exemple, une résine à base de PMMA, est soluble dans son monomère le MAM selon un rapport de 100 kg de PMMA pour 2 tonnes de MAM. Néanmoins, la solubilité dépend de la masse molaire du polymère, de la température et de la durée de solubilisation.

La résine de polymère P1 thermoplastique est de préférence un polymère (méth)acrylique. Elle peut être obtenue à partir de la polymérisation d'une composition liquide (méth)acrylique, encore appelée « sirop » ou « prépolymère », comprenant, tel que cela est décrit dans WO2013056845 et WO2014013028, un monomère (méth)acrylique ou un mélange de monomères (méth)acryliques et/ou un oligomère (méthacrylique) et/ou un polymère (méth)acrylique et au moins un amorceur radicalaire.

En particulier, la résine en polymère thermoplastique peut être une résine en poly(méthacrylate de méthyle) (PMMA). Notamment, un tel PMMA peut être le produit, commercialisé par la société ARKEMA sous la dénomination Altuglas^{®} et comprenant au moins un monomère de méthacrylate de méthyle.

Le monomère (méth)acrylique de base du polymère P1 (méth)acrylique est un monomère de type suivant : l'acide acrylique, l'acide méthacrylique, un monomère alkylacrylique, un monomère alkylméthacrylique, un monomère hydroxyalkylacrylique ou un monomère hydroxyalkylméthacrylique, ou un mélange de ceux-ci .

Plus particulièrement, ce monomère (méth)acrylique de base peut être le méthacrylate de méthyle, méthacrylate d'éthyle, acrylate de méthyle, acrylate d'éthyle, acide méthacrylique, acide acrylique, acrylate de n-butyle, acrylate d'isobutyle, méthacrylate de n-butyle, méthacrylate d'isobutyle, acrylate de cyclohexyle, méthacrylate de cyclohexyle, acrylate d'isobornyle, méthacrylate d'isobornyle, acrylate d'hydroxyéthyle et méthacrylate de hydroxyéthyle, et un mélange de ceux-ci.

### Chauffage local

La résine en polymère P1 thermoplastique est chauffée de façon à convertir, au moins en partie, le polymère P1 thermoplastique en au moins deux polymères P2.

La dépolymérisation d'une résine polymérique initiale peut conduire au monomère de base du polymère initial et/ou à des polymères P2 de masse molaire inférieure à celle du polymère P1 initial. Un polymère P2 de masse molaire inférieure est un polymère dont la longueur de chaine est réduite par rapport à la longueur de chaine du polymère P1 initial. Le monomère de base et les polymères P2 de masse molaire inférieure peuvent être réutilisés dans des procédés de plasturgie en vue de leur recyclage en produits industriels.

Afin d'obtenir des polymères P2 de masse réduite, un mode de réalisation du procédé de recyclage selon l'invention consiste à chauffer l'article comportant une résine en polymère P1 thermoplastique. Ce chauffage est appliqué bien localement sur une ou plusieurs zone(s) du polymère P1 de départ. Ainsi, le procédé de recyclage d'un article comportant une résine en polymère P1 thermoplastique selon l'invention est un procédé dans lequel la résine en polymère P1 thermoplastique est au moins partiellement dépolymérisée. De façon inventive le chauffage est réalisé localement c'est-à-dire que ce n'est pas l'intégralité de l'article qui est chauffé mais une ou plusieurs zones de la résine. Cela peut entraîner d'importants gains énergétiques notamment lorsque l'article est un article composite comportant plus de 50 % en poids, de préférence plus de 70 % en poids, et de façon plus préférée plus de 80 % en poids de renfort. En effet, un chauffage du renfort (i.e. matière non dépolymérisable) peut représenter une consommation énergétique aussi importante que la dépolymérisation de la fraction polymérique.

De façon inventive le chauffage est réalisé localement c'est-à-dire que ce n'est pas l'intégralité de la résine en polymère P1 thermoplastique qui est chauffée mais une ou plusieurs zones de la résine.

Néanmoins, dans le cadre de l'invention, il serait possible d'effectuer un chauffage global préalable, de préférence n'entraînant pas une dépolymérisation, jusqu'à une température inférieure à 200°C avant de procéder au chauffage local. C'est une préchauffage ou une étape du préchauffage. Ainsi, le chauffage local en est amélioré comme cela sera détaillé par la suite.

De préférence, le chauffage est appliqué sur plusieurs zones de la chaine polymérique constitutive du polymère P1. Dans ce cas, certaines zones de l'article non soumises au chauffage ne sont pas affectées et ne sont pas détériorées thermiquement par ledit chauffage. Ainsi, lorsque l'article est en matériau composite, c'est-à-dire comprenant une matrice en résine thermoplastique intimement liée à un renfort, le chauffage localisé sur certaines zones de l'article permet de préserver la qualité des matériaux tels que les fibres des renforts fibreux par exemple. En effet, les fibres, comme par exemple les fibres de verre, non soumises à une température élevée, ne sont pas dégradées thermiquement et peuvent donc être à nouveau utilisées pour former de nouveaux renforts fibreux par exemple.

Un autre avantage de ce chauffage localisé sur certaines zones de la résine P1 réside dans le fait qu'il permet de minimiser la consommation énergétique. En effet, il n'est pas nécessaire de chauffer à haute température toute la masse du polymère, ainsi dans le cas d'un pourcentage en poids de renfort (e.g. matière inorganique) élevé, le chauffage localisé permet de s'affranchir de la consommation énergétique qui aurait été nécessaire pour chauffer l'ensemble de la matière et donc aussi la matière inorganique.

Ce chauffage sur une ou plusieurs zone(s) permet de scinder la chaine polymérique P1 en plusieurs fragments correspondants à des polymères P2 de masse molaire réduite. Ainsi, grâce au chauffage local réalisé sur une ou plusieurs zones, il est possible d'obtenir rapidement plusieurs fragments polymériques P2 de masse réduite. Ces polymères P2 de masse réduite pourront ensuite être solubilisés, plus rapidement, dans leur monomère de base.

Selon un mode particulier de réalisation, le chauffage est réalisé et/ou répété jusqu'à obtenir une perte de masse de la résine en polymère P1 thermoplastique d'au moins 10% par rapport au poids total initial de la résine, de manière préférée jusqu'à obtenir une perte de masse de 10 % à 90 %, de manière plus préférée, le chauffage est réalisé et/ou répété jusqu'à obtenir une perte de masse de la résine en polymère P1 thermoplastique de 10 % à 60 % et de manière encore plus préférée de 10% à 40% par rapport au poids total initial de la résine. La perte de masse de la résine correspond à une dépolymérisation entraînant essentiellement la formation du monomère de base à l'état liquide ou gazeux. Ainsi, la perte de masse de la résine se traduit majoritairement par la formation du monomère. Le chauffage est réalisé et/ou répété jusqu'à ce que de 10 % à 90 % en poids de la résine polymère soit convertie en monomères de base. De préférence, le chauffage est réalisé et/ou répété jusqu'à ce que de 10 % à 60 % en poids de la résine polymère soit convertie en monomères de base et de façon encore plus préférée jusqu'à ce que de 10 % à 40 % en poids de la résine polymère soit convertie en monomères de base. Autrement dit, l'étape de chauffage est répétée jusqu'à obtenir un taux de dépolymérisation compris entre 10 % et 40 %.

La durée globale de chauffage peut par exemple être comprise entre quelques secondes à plusieurs minutes. La durée de chauffage peut ainsi être comprise entre 1 et 240 minutes. De préférence, le chauffage est réalisé par périodes.

### Chauffage par champs électriques pulsés

Dans un mode de réalisation, l'étape de chauffage est réalisée au moyen de champs électriques pulsés. Le chauffage au moyen de champs électriques pulsés est un chauffage obtenu par application de décharges électriques. Afin de chauffer au moyen de décharges électriques, il est possible d'utiliser un dispositif comprenant notamment une ou plusieurs enceinte(s), des électrodes et un générateur de courant. Le générateur de courant est généralement un générateur de haute tension et de courant continu et peut être complété par des condensateurs et un commutateur. Le générateur haute tension permet la transformation d'un courant électrique alternatif en un courant discontinu sous forme d'impulsions. L'énergie électrique peut être temporairement emmagasinée au niveau des électrodes. Selon la conception des générateurs, il est possible d'obtenir différentes formes d'impulsions électriques telles que des impulsions exponentielles décroissantes et des impulsions carrées.

L'étape de chauffage réalisée au moyen d'un champ électrique pulsé peut reposer sur l'application d'un champ électrique sous forme d'impulsion de très courte période (de l'ordre de la micro à la milliseconde). L'exposition des articles comportant une résine en polymère P1 à un champ électrique donné (exprimable en kV/cm) provoque des points locaux d'échauffement entraînant une rupture des chaînes de polymères. L'intensité du champ dépend de la nature de la cellule (formée de l'enceinte, les électrodes et le générateur de courant). L'application d'impulsions de courte durée, crée des instabilités locales au niveau de la chaine polymère.

L'application du champ électrique par un générateur peut donc correspondre au traitement d'un article, en batch ou en continu, entre deux électrodes, de façon à le soumettre à une tension électrique pulsée. Pour pouvoir réaliser des décharges de haute tension, le générateur comporte des capacités haute tension pour stocker de l'énergie électrique. Cette énergie est libérée dans des temps très brefs à travers un système de commutation rapide dans le circuit de décharge, et la puissance ainsi pulsée est très élevée. De manière avantageuse, le générateur est adapté pour délivrer des impulsions de manière répétée. Ces impulsions électriques peuvent être de polarité positive ou négative, de forme carré ou sinusoïdale par exemple.

Les impulsions peuvent atteindre une puissance de l'ordre du mégawatt, par exemple elles peuvent être comprises entre 100 W et 10⁸ MW.

La tension correspondante entre les électrodes peut être comprise entre 20 kV et 200 kV. La tension sera notamment dépendante de la taille des électrodes. Ainsi, elle sera de préférence comprise entre 1 et 1000 kV/cm.

Les impulsions peuvent être d'une durée de l'ordre de quelques microsecondes (µs) jusqu'à quelques millisecondes, par exemple elles peuvent être comprises entre 1 et 1000 µs, de préférence entre 5 à 200 µs, de façon plus préférée entre 10 à 100 µs.

La fréquence de décharge ou fréquence des impulsions peut être comprise entre 1 et 300 kHz, de préférence entre 5 et 225 kHz ou entre 10 et 40 kHz.

Le courant entre les électrodes peut aller de 8 à 100 kA en fonction du générateur.

Des impulsions répétées et/ou successives peuvent notamment générer une décharge électrique sous la forme d'un arc électrique. L'arc électrique est dû au passage d'un fort courant électrique qui entraine une élévation importante de température résultant de la dissipation de l'énergie par effet Joule.

En fonction de l'énergie stockée dans le générateur, l'intensité, la tension entre les électrodes, le temps et la fréquence de décharge, le chauffage par champs électriques pulsés peut conduire à la fragmentation de la chaine polymérique du polymère P1 et à l'obtention de polymères P2 de masse molaire réduite, et/ou peut permettre la formation du (des) monomère(s) de base.

Ainsi, le chauffage de la résine polymère thermoplastique peut être opéré par décharges électriques successives afin de former une quantité de monomère de base désirée. Selon un mode particulier de réalisation, les décharges électriques peuvent être répétées, afin de chauffer le polymère de départ P1 et /ou le(s) polymère(s) de masse réduite P2 jusqu'à ce qu'au moins 10 % en poids de la résine polymère soit convertie en monomère(s) de base.

Dans un autre mode préféré de réalisation, le chauffage de l'article 10 est réalisé localement, sur une ou plusieurs zones au moyen de champs électrique pulsés. En effet, placé entre les électrodes, l'article à recycler, en particulier la résine en polymère thermoplastique de l'article, peut être chauffé dans une ou plusieurs zones de la chaine polymérique, permettant ainsi le chauffage localisé dans ces zones, le chauffage étant obtenu grâce à l'application de champs électriques pulsés telle que décrit précédemment.

### Chauffage par micro-ondes

Dans une variante de réalisation l'étape de chauffage de l'article 10 à recycler peut être réalisée au moyen d'un rayonnement micro-ondes.

L'irradiation peut se faire en présence d'un **sensibilisant à la dépolymérisation par micro-ondes** (i.e. par rayonnement microondes). Le sensibilisant à la dépolymérisation par microondes peut être présent dans l'article à recycler ou bien ajouté avant l'étape de chauffage. De façon préférée, il est présent dans l'article à recycler comme par exemple dans la résine en polymère P1 thermoplastique.

De façon préférée, le facteur de perte diélectrique du sensibilisant à la dépolymérisation par micro-ondes est supérieur ou égale à 0,1 à une fréquence comprise entre 900 MHz et 2500 MHz et à 25°C, de façon plus préférée supérieur ou égale à 0,2 et de façon encore plus préférée supérieur ou égale à 10. Ainsi, le composé sensibilisant absorbe l'énergie micro-ondes plus rapidement que le polymère thermoplastique, puis dissipe cette énergie sous forme de chaleur entraînant ainsi un échauffement rapide. De façon plus préférée, le facteur de perte diélectrique du sensibilisant à la dépolymérisation par micro-ondes est supérieur ou égale à 0,2 à 2,45 GHz et 25°C et de façon encore plus préférée, le facteur de perte diélectrique du sensibilisant à la dépolymérisation par micro-ondes est supérieur à 10 à 2,45 GHz et 25°C.

De façon préférée, le composant sensibilisant présente une constante diélectrique supérieure ou égale à 5 à une fréquence comprise entre 900 MHz et 2500 MHz et à 25°C, de façon plus préférée supérieure ou égale à 20 et de façon encore plus préférée supérieure ou égale à 50. De façon plus préférée, le composé sensibilisant présente une constante diélectrique supérieure à 20 à 2,45 GHz et 25°C et de façon encore plus préférée, supérieure à 50 à 2,45 GHz et 25°C.

De façon préférée, le composé sensibilisant présente une tangente de l'angle de pertes supérieure ou égale à 10⁻⁴ à une fréquence comprise entre 900 MHz et 2500 MHz et à 25°C, de façon plus préférée supérieure ou égale à 10⁻² et de façon encore plus préférée supérieure ou égale à 0,1, par exemple supérieure ou égale à 0,5. Ainsi, le composé sensibilisant sera en mesure d'absorber une quantité importante d'énergie en provenance du rayonnement microonde. De façon plus préférée, le composé sensibilisant présente une constante diélectrique supérieure à 20 à 2,45 GHz et 25°C et de façon encore plus préférée, supérieure à 50 à 2,45 GHz et 25°C.

Le facteur de perte diélectrique et la constante diélectrique sont des paramètres qui dépendent notamment de la fréquence appliquée et de la température du matériau. De préférence, ces paramètres sont mesurés selon la méthode décrite dans le document « Chauffage diélectrique - Principes et spécificités » Techniques de l'Ingénieur D 5 940 - 1, Roussy G. et al. 2008.

Par exemple, un sensibilisant à la dépolymérisation par micro-ondes peut être :
- un oxyde tel que Al₂O₃, (Ba₁₋ₓSrₓ)TiO₃, BaTiO₃, Ba, (ZrₓTi₁₋ₓ)O₃, Ca-Si-Al-O, , CaTiO₃, Cr₂O₃, CuO, Fe₂O₃, Fe₃O₄, LaAlO₃, LaCrO₃, MnO₂, NiO, (Pb_{1-x-y}LaₓZr_{y})TiO₃, (Pb ₓMg₁₋ₓ) NbO₃ et PbTiO₃, Ta₂O₅, TiO₂, YBa₂Cu₃O₇, ZnO, ZrO₂, SrTiO₃, Sr(Zr ₓTi₁₋ₓ) O₃, FeO (OH), PbTiO₃, MgTiO₃, (Pb ₓMg₁₋ₓ) NbO₃, Ta₂O₅, (Zr ₓSi₁₋ₓ)O₂, MgCO₃, avec x, y et x+y compris entre 0 et 1 (bornes comprises) ;
- un non-oxyde tel que CrB, Fe₂B, FeSi, Mg, Si ;
- un carbure tel que le carbure de silicium SiC ;
- l'aluminate de calcium ;
- une charge carbonée telle que le noir de carbone, le graphite, le charbon actif, des nanotubes de carbone, le charbon ;
- des ferrites, tels que le bismuth ferrite (BiFeO₃) ;
- un complexe métallique tel que YBa₂Cu₃O₇, LaCrO₃, CuO, CuFeS₂, ZnCl₂, Ni-Phosphate, Chalcopyrite, Cordiérite, zéolithe, stéatite ;
- un nitrure tel que nitrure d'aluminium, nitrure de bore ;
- un silicate ;
- un fluorure tel que le fluorure de cérium, (Ba_{1-x-y}CaₓSr_{y}) F₂ ;

- ou leur mélange.

Des exemples de sensibilisant à la dépolymérisation par micro-ondes avec leurs propriétés diélectriques à différentes fréquences sont données dans le tableau 1.

**Tableau 1**

| **Sensibilisant** | **Fréquence de mesure (en MHz)** | **Constante diélectrique** | **10⁴×Tan delta** | **Facteur de pertes** |
|---|---|---|---|---|
| Al₂O₃ | 1000 | 9,6 - 10 | 2 | 0,0019 - 0,002 |
| Al₂O₃ | 3600 | 9 | 5 | 0,0045 |
| Nitrure d'aluminium | 8500 | 8 | 35 | 0,028 |
| Ambre | 3000 | 2,6 | 90 | 0,0207 |
| BaF₂ | 1000 | 7,3 | 10 | 0,0073 |
| BaTiO₃ | 2450 | 200-16000 | | 0,2 - 0,3 |
| BiFeO₃ | 9400 | 40 | 700 | 2,8 |
| Nitrure de Bore | 8500 | 4,37 | 3 | 0,0013 |
| Nitrure de Bore | 100 | 4,08 | 2.6 | 0,0011 |
| CaF₂ | 1000 | 6,5 | 10 | 0,0065 |
| Noir de carbone | 2500 | 20 | 5000 | 10 |
| Fluorure de cérium | 60 | 15,8 | 2530 | 4 |
| Chalcopyrite | 2450 | 11,01 | 7284 | 8,02 |
| Ferrites | 1000-10000 | 10-100 | 100-10000 | 1-100 |
| Basalte | 8500 | 10,2 | 5600 | 5,7 |
| Basalte | 1000 | 3,51 | 481 | 0,1688 |
| LaAlO₃ | 1 | 350 | 10 | 0,35 |
| Calcaire (Lucerne Valley) | 14000 | 8,21-8,45 | 38-80 | 0,0311 - 0,0668 |
| Cordiérite | 8520 | 4, 8 | 25 | 0,012 |
| Carbonate de magnésium | 8520 | 1.282 | 109 | 0,0139 |
| Métasilicate de magnésium | 14 000 | 6,37 | 12 | 0,0076 |
| Orthosilicate de magnésium | 8500 | 6,59 | 8 | 0,0053 |
| Marbre | 1 | 8 | 400 | 0,24 |
| MgOAl₂O₃ | 4070 - 4023 | 8,28 | 1 | 0,0008 |
| MgTiO₃ | 10 | 20 | 100 | 0,2 |
| SiC | 1000 | 107 | 6860 | 73,4 |
| SiC | 3000 | 60 | 5800 | 34,8 |
| SiC | 8500 | 47,7 | 5500 | 26,2 |
| Silicium | 1000 - 10000 | 11,7 - 12,9 | 50 - 150 | 0,0585 - 0,19 |
| Nitrite d'argent et de sodium | 9400 | 4,5 | <100 | <0,045 |
| SrF₂ | 1000 | 6,5 | 10 | 0,0065 |
| Stéatite | 1000 | 6 | 20 | 0,012 |
| Titanate de strontium | 1 | 200 | 5 | 0,1 |
| Zirconate de strontium | 1 | 38 | 3 | 0,038 |
| TiO₂ | 1000 | 80 | 8-30 | 0,0640 - 0,24 |
| Silicate de Zirconium | 10 | 10 | 100 | 0,1 |
| ZrO₂ | 1000 | 30 | 33 | 0,1 |

En particulier, le composé sensibilisant peut être sélectionné parmi : SiC, TiO₂, ZrO₂, BaTiO₃, SrTiO₃, MgTiO₃, LaAlO₃, Ferrites, Basalte et Marbre.

De façon préférée, le composé sensibilisant peut être sélectionné parmi : SiC, TiO₂, ZrO₂, et Marbre.

Alternativement, le composé sensibilisant peut être sélectionné parmi : Ferrites, Titanates de Barium et/ou Strontium et/ou Calcium et/ou Magnésium, LaAlO₃, SiC et Silicates, Zéolithes et ZrO₂.

Le chauffage induit par les micro-ondes présente l'avantage d'être rapide et localisé dans les zones contenant le composé sensibilisant.

Les micro-ondes peuvent être générés par un générateur de micro-ondes tel qu'un magnétron ou un klystron, avec une fréquence comprise, par exemple, entre 10 MHz et 5,8 GHz et de préférence comprise entre 0,9 et 2,5 GHz. Le temps d'irradiation ou d'exposition aux micro-ondes d'un article à traiter est de préférence de courte durée. Cette fréquence est variable selon le sensibilisant, la profondeur de pénétration, de la puissance. L'article est chauffé durant de courtes périodes entrecoupées par des étapes de refroidissement. Ce chauffage peut être réalisé de manière répétée afin d'obtenir des polymères P2 de masse réduite ou jusqu'à obtenir le monomère de base, qui pourra être condensé à l'état liquide, dans une capacité ad-hoc, en quantité au moins égale à 10% en poids de la résine. Avantageusement, en périphérie de la zone ayant été suffisamment chauffée pour obtenir le monomère, on aura une zone dont le chauffage est moindre et peut conduire aux polymères P2 de masse molaire réduite.

Ce chauffage peut être réalisé par tout dispositif adapté pour le chauffage par rayonnement micro-ondes. Tout comme le chauffage par champs électriques pulsés, le chauffage par microonde peut également être réalisé localement, sur certaines zones de l'article 10.

Dans le cas du chauffage par micro-ondes et d'un sensibilisant à la dépolymérisation par rayonnements micro-ondes, le polymère fondu ayant emmagasiné de la chaleur absorbe mieux le rayonnement micro-ondes que le polymère solide. En effet, du fait du facteur de perte qui varie avec la température, plus le polymère est chaud plus il absorbe le rayonnement micro-ondes ; donc en présence d'un sensibilisant bien dispersé, le chauffage est d'autant plus important que le polymère s'échauffe. Ainsi les zones déjà chaudes sont encore plus chauffées. Ainsi, il n'est plus nécessaire d'attendre que la chaleur diffuse dans l'ensemble du matériau. Le phénomène de chauffage local est donc intensifié. En outre, en présence du sensibilisant le chauffage est centré sur celui-ci, ce qui est plus favorable dans le cas de composites.

Le procédé de recyclage selon l'invention comporte également une **étape de refroidissement des au moins deux polymères P2 obtenus après chauffage.** Ce refroidissement est de préférence conduit jusqu'à atteindre une température sensiblement égale ou inférieure à la température d'ébullition des monomères de base.

De façon préférée, l'étape de refroidissement est conduite jusqu'à atteindre une température inférieure à la température d'ébullition des monomères de base. Elle peut par exemple être conduite jusqu'à une température inférieure ou égale à 250°C, de préférence inférieure ou égale à 150°C, de façon plus préférée inférieure ou égale à 100°C. La température reste néanmoins de préférence supérieure à 30°C, de façon plus préférée supérieure à 50°C et de façon encore plus préférée supérieure à 75°C.

Le refroidissement des au moins deux polymères P2 correspond également au refroidissement de la résine en polymère thermoplastique si les au moins deux polymères P2 n'ont pas été séparés de ladite résine.

Le refroidissement des polymères P2 de masse molaire réduite peut être un refroidissement passif (dissipation passive de l'énergie) ou bien un refroidissement actif. De façon préférée, le refroidissement des polymères P2 correspond à un refroidissement actif.

Par exemple, les au moins deux polymères P2 peuvent être aspergés de monomères de base à l'état liquide donc à une température inférieure à 110°C. Dans ce cas, la solution de monomères de base à l'état liquide comporte avantageusement un ou plusieurs de stabilisants ou inhibiteurs de polymérisation. Le stabilisant peut par exemple être de la phénothiazine, de l'éther monométhylique d'hydroquinone (MEHQ), de l'Hydroquinone (HQ), de la p-benzoquinone.

Avantageusement, l'étape de refroidissement peut comporter une étape de récupération de chaleur.

Le procédé de recyclage selon l'invention comporte également une **étape de solubilisation des au moins deux polymères P2**. Cette solubilisation est réalisée dans une solution comportant les monomères de base.

Le monomère de base est par exemple issu de la dépolymérisation du polymère de départ P1. Grâce à sa masse molaire réduite, la solubilisation du polymère P2 dans le monomère de base est plus facile et plus rapide que la solubilisation du polymère P1 dans le même monomère de base. L'invention permet ainsi la dépolymérisation rapide et efficace d'un article comportant un polymère P1 thermoplastique.

Par exemple, un polymère P1 soluble dans son monomère de base peut être le poly(méthacrylate de méthyle). La masse molaire moyenne d'un polymère P1 (méth)acrylique est généralement élevée, typiquement supérieure à 50 000 g/mol, de préférence supérieure à 100 000 g/mol. Un polymère P2 de masse molaire réduite est alors un polymère dont la masse molaire est inférieure à 100 000 g/mol, de préférence inférieure à 50 000 g/mol, et de manière plus préférée inférieure à 10 000 g/mol. Le polymère P2 présentant une masse molaire de 10 000 g/mol ou inférieure se solubilise plus rapidement dans son monomère de base, le méthacrylate de méthyle par exemple, que le polymère (méth)acrylique P1.

L'étape de solubilisation peut comprendre la mise en contact d'une quantité importante de monomère de base par rapport à la masse de polymère car la solubilité du polymère peut être assez faible. Ainsi, le procédé peut comprendre une étape de mise en contact d'au moins une fois la quantité en poids de monomère de base par rapport au poids initial de l'article à recycler, de préférence au moins 1,5 fois, de façon plus préférée au moins 2 fois et de façon encore plus préférée au moins 3 fois. En outre, plus la quantité de monomère de base introduite sera importante, plus la solubilisation sera rapide.

La quantité de monomère de base nécessaire pour la solubilisation des polymères P2 est généralement élevée. Ainsi, avantageusement, le procédé selon l'invention comporte une étape de dépolymérisation complète des polymères P2, par exemple au sein d'une unité de dépolymérisation secondaire, de façon à produire du monomère de base utilisable pour la solubilisation des polymères P2 provenant d'autres articles à recycler. Alternativement, du MAM ne provenant pas de la dépolymérisation des polymères peut être utilisé.

Le procédé selon l'invention peut également comporter une **étape de récupération de monomères de base à l'état gazeux,** formés lors de l'étape de chauffage de la résine.

Dans ce cas, avantageusement, le procédé selon l'invention comporte une étape de condensation de ces monomères de base à l'état gazeux de façon à obtenir une solution comportant les monomères de base.

De façon préférée, cette condensation peut être réalisée par une mise en contact de monomères à l'état gazeux avec des monomères à l'état liquide. Cette mise en contact peut par exemple être réalisée dans un dispositif de type douche, par aspersion des monomères à l'état liquide (i.e. froids) dans une enceinte recueillant les monomères de base à l'état gazeux (i.e. chauds). Dans ce cas, le dispositif peut comprendre un moyen d'introduction d'un stabilisant, ou inhibiteur de polymérisation. Une telle mise en contact permet de refroidir les polymères P2 et dans certains cas plus largement la résine et l'article, d'une part et de les laver d'autre part.

Le mélange obtenu de polymères P2 solubilisés dans le monomère de base est collecté dans un moyen de collecte dédié. Ce mélange peut alors être soit réutilisé directement, soit envoyé vers une unité de dépolymérisation secondaire afin de n'obtenir que du monomère de base.

La divulgation concerne en outre **un système pour recycler un article comportant une résine en polymère P1 thermoplastique.**

Le système comporte notamment **une enceinte pour accueillir l'article** à recycler. Cette enceinte est avantageusement équipée de moyens pour chauffer la résine en polymère P1 thermoplastique de façon à convertir, au moins en partie, le polymère P1 thermoplastique en au moins deux polymères P2.

Cette enceinte peut par exemple prendre la forme d'une extrudeuse à double vis co-rotative, d'un co-malaxeur, d'un lit fluidisé ou d'un four.

Le système comporte également un **dispositif d'échange thermique** configuré pour refroidir les au moins deux polymères P2. Le dispositif d'échange thermique peut être un échangeur de chaleur à contact direct ou à contact indirect.

De façon préférée, le dispositif d'échange thermique est un échangeur de chaleur à contact indirect. Un tel échangeur de chaleur peut être par exemple, un échangeur tubulaire, un échangeur à plaque, à faisceaux tubulaire horizontal, à faisceaux tubulaire vertical, un échangeur à spirales, un échangeur à ailette, ou encore un échangeur rotatif ou à bloc. Ces exemples ne sont pas limitatifs, et l'Homme du métier appréciera que d'autres types d'échangeurs de chaleur à contact indirects peuvent être utilisés. Un échangeur de chaleur à contact indirect peut également mettre en oeuvre un fluide caloporteur. Le fluide caloporteur peut être un liquide, par exemple de l'eau, un solvant ou un mélange de ces derniers, des sels fondus ou encore de l'huile de synthèse par exemple une telle huile de synthèse peut être le produit commercialisé par la société ARKEMA sous la dénomination Jarytherm (marque déposée).

Le système comporte également **un dispositif de mise en contact des au moins deux polymères P2 avec une solution comportant les monomères de base.** Ce dispositif peut prendre des formes très variées et peut par exemple correspondre à un dispositif apte à comporter un bain de monomères de base ou encore un dispositif comportant une douche apte à générer une aspersion de monomères de base sur les au moins deux polymères P2. Par exemple, le système peut comprendre en outre un moyen d'injection apte à introduire dans l'enceinte un monomère de base à l'état liquide.

Le système 1 comporte également **un dispositif de récupération** configuré pour recueillir les au moins deux polymères P2 solubilisés dans la solution comportant les monomères de base.

En outre, lorsque l'article à recycler comprend un matériau composite comportant une résine polymère et de renfort par exemple, il est possible de séparer plus aisément la fibre du mélange polymérique obtenu par chauffage de l'article. Pour cela, le système 1 selon l'invention peut comprendre en outre un **moyen de filtration** apte à retenir des solides non solubles dans le monomère de base. Un tel moyen peut par exemple se présenter sous la forme d'un tamis, d'une grille, par une unité de décantation ou encore par un module de centrifugation.

Le renfort fibreux se rapporte généralement à plusieurs fibres, des stratifils unidirectionnels ou un mat à filament continu, des tissus, des feutres ou des non-tissés qui peuvent être sous la forme de bandes, nappes, tresses, mèches ou pièces.

De manière avantageuse, les fibres non soumises au chauffage ne sont pas dégradées thermiquement et peuvent donc être réutilisées en vue de fabriquer d'autres renforts fibreux par exemple.

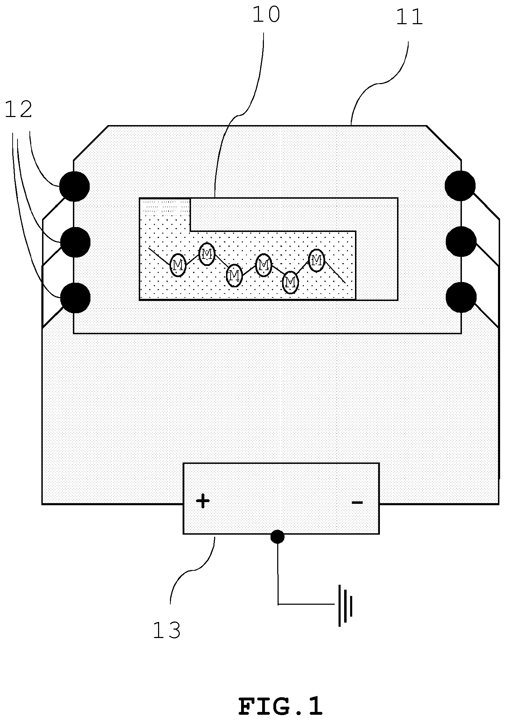

En référence à la **Figure 1**, le système 1 peut par exemple comprendre une enceinte 11 adaptée pour accueillir un article 10 à recycler et, optionnellement un fluide. En effet, un gaz neutre ou un liquide tel que l'eau peuvent être introduits dans l'enceinte contenant l'article à recycler. A cette fin, l'enceinte comprend des ouvertures pour permettre l'introduction de l'article et du fluide, ainsi que des moyens d'évacuation dudit fluide. En outre, l'enceinte peut comporter des capteurs de pression, des capteurs de températures, un tamis ou une grille, des valves, des moyens pour chauffer la résine ou une ou plusieurs zone(s) de ladite résine pendant une durée déterminée et à une température donnée et/ ou des éléments favorisant l'effet d'un arc électrique. En effet, le produit est introduit chaud ou froid et peut aussi être chauffé et/ou maintenu en température pendant le traitement. L'enceinte est sous vide ou sous flux de gaz, pour emmener le monomère qui se forme vers une unité de condensation via un moyen de collecte. L'unité de condensation est plus particulièrement apte à condenser le mélange de monomère de base à l'état gazeux tandis que le moyen de collecte est plus particulièrement apte à collecter un mélange de monomère de base à l'état gazeux.

L'enceinte 11 comporte notamment au moins deux électrodes 12 qui peuvent être disposées à l'opposé l'une de l'autre. Ces électrodes peuvent être, par exemple, de type pointe/plane ou sous la forme de rail métallique, et elles peuvent être une anode ou une cathode. L'article 10 à recycler est placé entre au moins deux électrodes. La distance entre deux électrodes opposées peut être de l'ordre du centimètre ou de l'ordre du mètre. Avantageusement, une décharge électrique est générée entre une électrode formant anode et une électrode formant cathode.

Afin de chauffer l'article à recycler à l'aide de décharges électriques, le système comprend un générateur de courant 13, par exemple un générateur de Marx. Le générateur génère des impulsions électriques et libère donc de l'énergie électrique dans un circuit de décharge auquel les électrodes sont reliées.

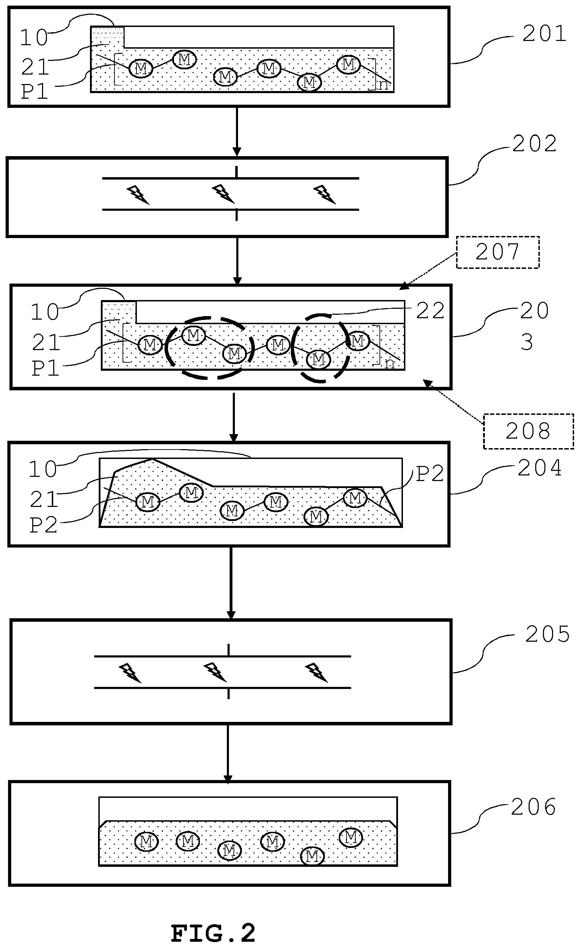

La **Figure 2****,** illustre une mise en oeuvre pratique des étapes du procédé de recyclage selon l'invention, qui se décomposent en étapes 201 à 208. Ainsi, dans une première étape 201 un article 10 comprenant une résine 21 en polymère P1 thermoplastique est placé dans l'enceinte 11 adaptée pour un traitement thermique localisé de l'article 10 par application de champs électriques pulsés. Selon une étape 202, des décharges électriques sont générées par le générateur 13. Les parties de l'article 10 soumises à ces décharges électriques sont alors chauffées localement 203 à une température supérieure à 250 °C, de préférence supérieure à 300°C.

Ce chauffage local se traduit par le chauffage de zone(s) 22 de la chaine polymérique P1, les autres zones de la chaine n'étant pas affectées par le chauffage. Ce chauffage peut conduire à plusieurs polymères P2 de masse molaire réduite par rapport à la masse molaire du polymère P1 de la résine, et s'accompagne d'une déformation de la résine comme illustré dans l'étape 204.

Dans une étape 205, l'étape de chauffage peut être répétée, c'est-à-dire que la résine peut être soumise à plusieurs impulsions électriques, par exemple au moins 300 décharges électriques pendant une durée comprise entre 40 et 50 µs chacune et chaque impulsion ayant chacune une énergie supérieure à 100 Joules. La répétition des décharges électriques peut conduire, dans une étape 206, à l'obtention de monomères.

Le procédé de recyclage selon l'invention peut en outre comprendre une étape de filtration référencée 207, en traits pointillés sur la Figure 2. Cette étape de filtration peut être réalisée à l'aide d'un moyen de filtration, tel qu'un tamis ou une grille, afin de retenir les éléments non solubles dans le monomère de base. Elle intervient après l'étape de chauffage et permet ainsi de séparer d'une part le mélange comprenant éventuellement des polymères P1 résiduels et/ou des polymères P2 et/ou des monomères de base, et d'autre part les résidus insolubles dans ledit mélange, tels que les fibres et matériaux inorganiques. Le mélange peut être collecté dans une enceinte prévue à cet effet.

Dans une variante optionnelle, schématisée en traits pointillés sur la Figure 2, le procédé comprend une étape 208 d'introduction de monomère à l'état liquide dans laquelle un monomère de base, correspondant au monomère de base de la résine polymérique de l'article à recycler, est ajouté à une température comprise entre 25 et 80°C et sous forme liquide après l'étape de chauffage 203. Un tel ajout permet avantageusement de solubiliser le polymère P2 de masse réduite dans le cas où le chauffage ne conduit pas au monomère de base ou conduit à une quantité de monomère insuffisante pour permettre la solubilisation de polymère P2. Cet ajout peut ainsi aider à la solubilisation même lorsqu'il y a production du monomère de base.

Avantageusement, les monomères de base ajoutés peuvent provenir du recyclage d'un autre article. Par exemple de dépolymérisation de la solution de polymère P2 dans le monomère issu d'une opération précédente, ou il peut s'agir de monomère vierge.

### [Exemples]

Pour la réalisation des exemples selon l'invention on prépare des échantillons de PMMA contenant des sensibilisants aux micro-ondes. Des granulés de PMMA de Altuglas de grade V825 sont mélangés avec une poudre de carbure de silicium. Le mélange est porté à une température de 210 °C de manière à faire fondre le PMMA et à obtenir un mélange intime de carbure de silicium et de PMMA. Le mélange fondu est placé dans un moule de manière à obtenir des carrés de 10 cm*10 cm * 1 cm.

On reproduit l'exemple précédent sans carbure de silicium (échantillon de référence).

### Exemple 1 - selon l'invention

Dans la cavité micro-onde, un réacteur en verre (transparent aux micro-ondes) est positionné. En sa partie haute, le réacteur est muni d'un condenseur qui permet de récupérer le monomère qui est produit, sans le renvoyer dans le réacteur, ni dans la zone soumise aux micro-ondes.

On introduit dans le réacteur 200 g de la plaque de PMMA contenant le SiC broyée grossièrement de 1 à 2 cm. L'échantillon est préchauffé à environ 130 °C. On applique un flux de microondes pendant 15 secondes à 2,45 GHz et une puissance de 1kW. Cette opération est répétée 10 fois espacées de 10 s entre chaque.

Le produit est alors récupéré et il a gardé globalement sa forme initiale, néanmoins on constate une plus grande rugosité de surface. L'échantillon est pesé pour déterminer la perte de masse par rapport à l'échantillon initial. La perte de masse est de 12 % pds.

La masse de monomère formé et piégé dans le condenseur est déterminée et donne une bonne indication de la dépolymérisation.

### Exemple 2 - selon l'invention

On reproduit l'exemple précédent, en prolongeant l'exposition aux microondes jusqu'à atteindre une perte de masse de 20 % pds indiquée par la masse de monomère récupéré dans le condenseur, et confirmée par pesée du solide restant.

Le solide présent dans le réacteur est ramené à une température de 150 °C. On verse alors, 1 litre de monomère méthacrylate de méthyle stabilisé avec un inhibiteur de polymérisation (Hydroquinone à 300 ppm poids) et en laissant un ciel d'air au-dessus de l'échantillon. La température de la suspension s'établit à 45 °C. Le mélange est agité pendant 2 heures à cette température, puis le solide résiduel est filtré et essoré. La masse de polymère résiduel est de 25 g.

### Exemple 3 - comparatif.

On reproduit l'exemple précédent avec le PMMA sans carbure de silicium et pour la même durée d'exposition aux micro-ondes, même si le taux de production de monomère est plus faible. La masse de polymère résiduel après contact avec le monomère liquide est de 180 g.

### Exemple 4 - selon l'invention

On reproduit l'exemple 2 avec un composite de PMMA et de fibres de carbone contenant 50 % pds de fibres de carbone et pour la même durée d'exposition aux micro-ondes. La masse de composite résiduel après contact avec le monomère liquide est de 120 g.

## Revendications

1. Procédé de recyclage d'un article (10) comportant une résine (21) en polymère P1 thermoplastique, ledit polymère P1 thermoplastique ayant été formé à partir de monomères de base, ledit procédé comprenant les étapes suivantes :
- Chauffer localement plusieurs zones (22) de ladite résine afin de convertir, au moins en partie, le polymère P1 thermoplastique en au moins deux polymères P2, lesdits au moins deux polymères P2 ayant une masse molaire inférieure à la masse molaire dudit polymère P1,
- Refroidir lesdits au moins deux polymères P2 obtenus après chauffage à une température sensiblement égale ou inférieure à la température d'ébullition desdits monomères de base, et
- Solubiliser lesdits au moins deux polymères P2 dans une solution comportant lesdits monomères de base.

2. Procédé de recyclage selon la revendication 1, **caractérisé en ce que** la résine en polymère P1 thermoplastique est une résine de poly(méthacrylate de méthyle), de polystyrène, ou d'un mélange de ces polymères.

3. Procédé de recyclage selon la revendication 1 ou 2, **caractérisé en ce que** la résine en polymère P1 thermoplastique est un polymère (méth)acrylique.

4. Procédé de recyclage selon l'une quelconque des revendications 1 à 3, **caractérisé en ce que** l'article à base de résine en polymère P1 thermoplastique est un article en matériau composite qui comprend en outre un renfort et **en ce que** le procédé comprend en outre une étape de filtration de solides après l'étape de solubilisation des polymères P2 dans le monomère de base.

5. Procédé de recyclage selon l'une quelconque des revendications 1 à 4, **caractérisé en ce que** l'étape de chauffage est répétée jusqu'à obtenir une perte de masse de la résine en polymère P1 thermoplastique d'au moins 10 % par rapport au poids total initial de la résine polymère P1.

6. Procédé de recyclage selon l'une quelconque des revendications 1 à 5, **caractérisé en ce que** l'étape de chauffage est réalisée au moyen de champs électriques pulsés ou de microondes.

7. Procédé de recyclage selon l'une quelconque des revendications 1 à 6, **caractérisé en ce que** l'étape de chauffage consiste à chauffer par impulsions d'une durée comprise entre 1 et 1000 µs, de préférence comprise entre 10 et 500 µs et de manière plus préférée de 10 à 100 µs.

8. Procédé de recyclage selon l'une quelconque des revendications 1 à 6, **caractérisé en ce que** l'étape de chauffage consiste à chauffer au moyen d'un rayonnement micro-ondes.

9. Procédé de recyclage selon l'une quelconque des revendications 1 à 8, **caractérisé en ce que** l'article comprend un sensibilisant à la dépolymérisation par microondes.

10. Procédé de recyclage selon l'une quelconque des revendications 1 à 9, **caractérisé en ce que** lesdits monomères de base compris dans la solution utilisée pour solubiliser lesdits au moins deux polymères P2 proviennent au moins en partie du recyclage d'un autre article à base de résine en polymère P1 thermoplastique.

11. Procédé de recyclage selon l'une quelconque des revendications 1 à 10, **caractérisé en ce que** la température de chauffage local est supérieure à 300°C.

12. Procédé de recyclage selon l'une quelconque des revendications 1 à 11, **caractérisé en ce que** l'étape de refroidissement est conduite jusqu'à une température inférieure ou égale à 250°C, de préférence inférieure ou égale à 150°C, de façon plus préférée inférieure ou égale à 100°C.

13. Procédé de recyclage selon l'une quelconque des revendications 1 à 11, **caractérisé en ce que** l'étape de solubilisation comprend une étape de mise en contact d'au moins une fois la quantité en poids de monomère de base par rapport au poids initial de l'article à recycler, de préférence au moins 1,5 fois, de façon plus préférée au moins 2 fois et de façon encore plus préférée au moins 3 fois.

14. Procédé de recyclage selon l'une quelconque des revendications 1 à 13, **caractérisé en ce que** le procédé comporte une étape du préchauffage.

## Patentansprüche

1. Verfahren zur stofflichen Wiederverwertung eines Gegenstands (10), der ein Harz (21) aus thermoplastischem Polymer P1 aufweist, wobei das thermoplastische Polymer P1 aus Basismonomeren gebildet ist, wobei das Verfahren die folgenden Schritte umfasst:
- örtlich begrenztes Erhitzen mehrerer Bereiche (22) des Harzes, um das thermoplastische Polymer P1 zumindest teilweise in mindestens zwei Polymere P2 umzuwandeln, wobei die mindestens zwei Polymere P2 eine Molmasse haben, welche geringer als die Molmasse des Polymers P1 ist,
- Abkühlen der mindestens zwei Polymere P2, welche nach dem Erhitzen erhalten wurden, auf eine Temperatur, die im Wesentlichen kleiner oder gleich der Siedetemperatur der Basismonomere ist, und
- Inlösungbringen der mindestens zwei Polymere P2 in einer Lösung, welche die Basismonomere aufweist.

2. Verfahren zur stofflichen Wiederverwertung nach Anspruch 1, **dadurch gekennzeichnet, dass** es sich bei dem Harz aus thermoplastischem Polymer P1 um ein Harz aus Poly(methylmethacrylat), aus Polystyrol oder aus einer Mischung dieser Polymere handelt.

3. Verfahren zur stofflichen Wiederverwertung nach Anspruch 1 oder 2, **dadurch gekennzeichnet, dass** es sich bei dem Harz aus thermoplastischem Polymer P1 um ein (Meth)acrylsäurepolymer handelt.

4. Verfahren zur stofflichen Wiederverwertung nach einem beliebigen der Ansprüche 1 bis 3, **dadurch gekennzeichnet, dass** es sich bei dem Gegenstand auf Grundlage von Harz aus thermoplastischem Polymer P1 um einen Gegenstand aus Verbundwerkstoff handelt, der darüber hinaus ein Verstärkungsmittel umfasst, und dadurch, dass das Verfahren darüber hinaus einen Schritt des Abfiltrierens von Feststoffen nach dem Schritt des Inlösungbringens der Polymere P2 in dem Basismonomer umfasst.

5. Verfahren zur stofflichen Wiederverwertung nach einem beliebigen der Ansprüche 1 bis 4, **dadurch gekennzeichnet, dass** der Schritt des Erhitzens wiederholt wird, bis ein Massenverlust des Harzes aus thermoplastischem Polymer P1 von mindestens 10 % erzielt ist, bezogen aus das ursprüngliche Gesamtgewicht des Polymerharzes P1.

6. Verfahren zur stofflichen Wiederverwertung nach einem beliebigen der Ansprüche 1 bis 5, **dadurch gekennzeichnet, dass** der Schritt des Erhitzens mittels gepulster elektrischer Felder oder mittels Mikrowellen durchgeführt wird.

7. Verfahren zur stofflichen Wiederverwertung nach einem beliebigen der Ansprüche 1 bis 6, **dadurch gekennzeichnet, dass** der Schritt des Erhitzens darin besteht, die Erhitzung mittels Impulsen mit einer Dauer im Bereich von 1 bis 1000 µs, vorzugsweise im Bereich von 10 bis 500 µs und stärker bevorzugt von 10 bis 100 µs zu bewirken.

8. Verfahren zur stofflichen Wiederverwertung nach einem beliebigen der Ansprüche 1 bis 6, **dadurch gekennzeichnet, dass** der Schritt des Erhitzens darin besteht, die Erhitzung mittels einer Mikrowellenstrahlung zu bewirken.

9. Verfahren zur stofflichen Wiederverwertung nach einem beliebigen der Ansprüche 1 bis 8, **dadurch gekennzeichnet, dass** der Gegenstand ein Mittel umfasst, welches eine Anfälligkeit für eine Depolymerisation durch Mikrowellen bewirkt.

10. Verfahren zur stofflichen Wiederverwertung nach einem beliebigen der Ansprüche 1 bis 9, **dadurch gekennzeichnet, dass** die Basismonomere, welche in der Lösung enthalten sind, wie sie verwendet wird, um die mindestens zwei Polymere P2 in Lösung zu bringen, zumindest teilweise aus der stofflichen Wiederverwertung eines anderen Gegenstands auf Grundlage von Harz aus thermoplastischem Polymer P1 stammen.

11. Verfahren zur stofflichen Wiederverwertung nach einem beliebigen der Ansprüche 1 bis 10, **dadurch gekennzeichnet, dass** die Temperatur der örtlich begrenzten Erhitzung mehr als 300 °C beträgt.

12. Verfahren zur stofflichen Wiederverwertung nach einem beliebigen der Ansprüche 1 bis 11, **dadurch gekennzeichnet, dass** der Schritt des Abkühlens bis zu einer Temperatur durchgeführt wird, die kleiner oder gleich 250 °C, vorzugsweise kleiner oder gleich 150 °C, stärker bevorzugt kleiner oder gleich 100 °C ist.

13. Verfahren zur stofflichen Wiederverwertung nach einem beliebigen der Ansprüche 1 bis 11, **dadurch gekennzeichnet, dass** der Schritt des Inlösungbringens einen Schritt des Inkontaktbringens mit der mindestens einfachen Menge nach Gewicht an Basismonomer, bezogen auf das ursprüngliche Gewicht des stofflich wiederzuverwertenden Gegenstand, vorzugsweise der mindestens 1,5-fachen Menge, stärker bevorzugt der mindestens 2-fachen Menge und noch stärker bevorzugt der mindestens 3-fachen Menge umfasst.

14. Verfahren zur stofflichen Wiederverwertung nach einem beliebigen der Ansprüche 1 bis 13, **dadurch gekennzeichnet, dass** das Verfahren einen Schritt des Vorheizens aufweist.

## Claims

1. Process for the recycling of an article (10) comprising a thermoplastic polymer P1 resin (21), said thermoplastic polymer P1 having been formed from base monomers, said process comprising the following stages:
- locally heating several zones (22) of said resin in order to convert, at least in part, the thermoplastic polymer P1 into at least two polymers P2, said at least two polymers P2 having a lower molar mass than the molar mass of said polymer P1,
- cooling said at least two polymers P2 obtained after heating to a temperature substantially equal to or lower than the boiling point of said base monomers, and
- dissolving said at least two polymers P2 in a solution comprising said base monomers.

2. Recycling process according to Claim 1, **characterized in that** the thermoplastic polymer P1 resin is a resin of poly(methyl methacrylate), of polystyrene or of a mixture of these polymers.

3. Recycling process according to Claim 1 or 2, **characterized in that** the thermoplastic polymer P1 resin is a (meth)acrylic polymer.

4. Recycling process according to any one of Claims 1 to 3, **characterized in that** the article based on thermoplastic polymer P1 resin is an article made of composite material which additionally comprises a reinforcement and **in that** the process additionally comprises a stage of filtration of solids after the stage of dissolution of the polymers P2 in the base monomer.

5. Recycling process according to any one of Claims 1 to 4, **characterized in that** the heating stage is repeated until a loss in weight of the thermoplastic polymer P1 resin of at least 10%, with respect to the initial total weight of the polymer P1 resin, is obtained.

6. Recycling process according to any one of Claims 1 to 5, **characterized in that** the heating stage is carried out by means of pulsed electric fields or of microwaves.

7. Recycling process according to any one of Claims 1 to 6, **characterized in that** the heating stage consists in heating by pulses with a duration of between 1 and 1000 µs, preferably of between 10 and 500 µs and more preferably of 10 to 100 µs.

8. Recycling process according to any one of Claims 1 to 6, **characterized in that** the heating stage consists in heating by means of microwave radiation.

9. Recycling process according to any one of Claims 1 to 8, **characterized in that** the article comprises a sensitizer for the depolymerization by microwaves.

10. Recycling process according to any one of Claims 1 to 9, **characterized in that** said base monomers included in the solution used to dissolve said at least two polymers P2 originate at least in part from the recycling of another article based on thermoplastic polymer P1 resin.

11. Recycling process according to any one of Claims 1 to 10, **characterized in that** the local heating temperature is greater than 300°C.

12. Recycling process according to any one of Claims 1 to 11, **characterized in that** the cooling stage is carried out down to a temperature of less than or equal to 250°C, preferably of less than or equal to 150°C, more preferably of less than or equal to 100°C.

13. Recycling process according to any one of Claims 1 to 11, **characterized in that** the dissolution stage comprises a stage of bringing into contact at least one times the amount by weight of base monomer with respect to the initial weight of the article to be recycled, preferably at least 1.5 times, more preferably at least 2 times and more preferably still at least 3 times.

14. Recycling process according to any one of Claims 1 to 13, **characterized in that** the process comprises a preheating stage.
